# EUROPEAN PATENT SPECIFICATION

(11) **EP 1 565 031 B1**
(45) Date of publication and mention of the grant of the patent: **06.02.2008**
(21) Application number: 04250806.9
(22) Date of filing: 16.02.2004
(51) Int. Cl.: H04Q 11/04, H04M 11/06

(54) **Redundancy system and method for a digital subscriber line access multiplexer**
Redundanzsystem und -Verfahren für einen DSLAM
Système et procédé de redondance pour un DSLAM

(43) Date of publication of application: 17.08.2005
(73) Proprietor: ZyXEL Communications Corporation, Hsin-Chu, Taiwan (TW)
(72) Inventor: Lee, Ping-Chin, Hsin-Chu (TW); Yuan, Nan-Pyng, Hsin-Chu (TW); Sun, Chia-Hung, Hsin-Chu (TW)
(74) Representative: Viering, Jentschura & Partner

(56) References cited:
- PAPA DEL J ET AL: "DSLAM - A BROADBAND DIGITAL SUBSCRIBER LINE ACCESS MULTIPLEXER SYSTEM" NEC RESEARCH AND DEVELOPMENT, vol. 40, no. 1, January 1999 (1999-01), pages 103-107, XP000883831 ISSN: 0547-051X

## Description

### BACKGROUND OF THE INVENTION

### 1. Technical Field

The present invention is related to a redundancy system for digital subscriber line access multiplexer (DSLAM), and more particularly to a redundancy system for DSLAM, which is built in a central office end.

### 2. Description of the Prior Art

Asymmetric digital subscriber line (ADSL) is a technique utilizing existing twisted-pair telephone line to provide broadband connection with Internet. Recently, the price becomes reasonable so that ADSL has been gradually used instead of conventional dialing connection and Internet private line. More and more business and residential customers have applied ADSL.

In general, the basic configuration of ADSL includes an ATU-R (ADSL transceiver unit at remote terminal end, i.e, ADSL Modem/Router) at client end connected with an ATU-C (ADSL transceiver unit at central office end) at central office end as disclosed in PAPA DEL J ET AL: "DSLAM - A BROADBAND DIGITAL SUBSCRIBER LINE ACCESS MULTIPLEXER SYSTEM", NEC RESEARCH AND DEVELOPMENT, vol. 40, no. 1 January 1999 (01.1999).

The requirement for ADSL is gradually increased so that it is necessary for the ADSL service to build a great deal of DSLAM at central office end to satisfy the requirement of a great amount of ADSL clients for connection with Internet.

For example, every ATU-C port of the DSLAM at the central office end can provide maximum downstream speed of 8Mbps and maximum upstream speed of 1Mbps. The service speed of ADSL is often classified into five grades, that is, downstream/upstream 512K/64K, 768K/128K, 1.5M/384K, 3M/512K and 6M/640K. Therefore, the DSLAM can firstly perform first stage multiplex process in view of the speed grade of the subscriber before substantial processing in the ATU-C port. This can increase the number of the subscribers.

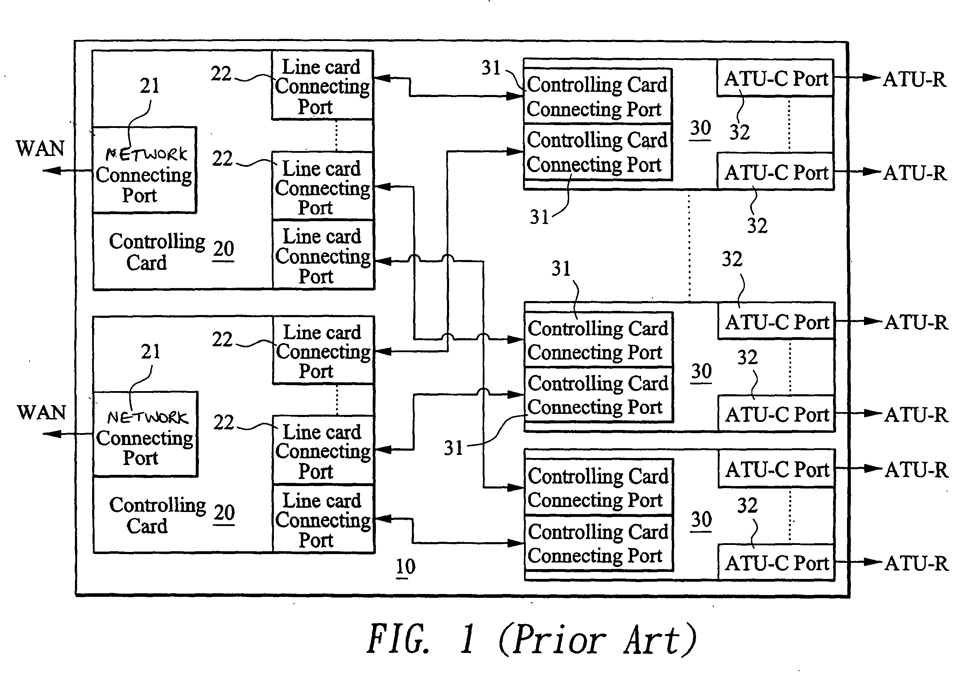

Fig. 1 shows the structure of the conventional DSLAM equipment. A conventional DSLAM equipment 10 includes at least two sets of control cards 20 and plurality line cards 30. Each control card 20 includes at least one set of WAN connecting port 21 and plurality sets of line card connecting ports 22. The WAN connecting port 21 is connected to the Internet.

The line card connecting port 22 is correspondingly connected to a control card connecting port 31 of each card 30. Each line card 30 has two sets of control card connecting ports 31 for connecting with the control cards 20. The line card 30 further has plurality sets of ATU-C ports 32 for correspondingly connecting with the ATU-R (ADSL Modem/Router) at the subscriber end.

One of the two control cards 20 is in active state, while the other one is in standby state. In the case that the active control card 20 is in fault or removal state, the standby control card 20 is immediately set into active state. Therefore, each line card 30 has two sets of control card connecting ports 31 for respectively connecting with the two control cards 20. This is referred to "dual line-connect".

Each card 30 has two sets of control card connecting ports 31 so that the volume of circuit of the line card is excessive. In addition, the cost for the parts and connecting lines is increased. Therefore, there can be only one set of redundancy control card 20. In the case that both sets of control cards 20 are in fault state, the DSLAM will fail.

The present invention is intended to provide a Y-connection scheme for solving above problem. Each line card 30 has only one control card connecting port 31 which is connected to at least two sets of control cards via the same connecting line. This can minimize the occupied space of the line card 30 and reduce the cost for the parts. Therefore, more line cards 30 can be arranged in the DSLAM equipment with the same size. Moreover, more then half of the interconnection lines of the conventional DSLAM can be saved.

### SUMMARY OF THE INVENTION

It is therefore a primary object of the present invention to provide a redundancy system and method for DSLAM. The redundancy system employs Y-connection scheme instead of the dual-line connection scheme of conventional DSLAM. In addition, the redundancy system is designed with a detection means which can automatically switch the control card in removal or fault state. Therefore, the occupied space of the line card of the DSLAM can be minimized and the cost for the parts can be reduced. Also, a large numbers of interconnection lines of the DSLAM can be saved.

According to the above object, the redundancy system for DSLAM of the present invention includes plurality control cards each having plurality line card connecting ports and more then one network connecting port(s), plurality line cards each having plurality line connecting ports and a control card connecting port and plurality Y-connecting lines. The same Y-connecting line is used to connect one of the control card connecting ports with two or more line card connecting ports. By means of detecting the control cards, the operation state on the Y-connecting lines can be detected switched. One of the control cards is set into active state and the remaining control cards are set into standby state.

The method for DSLAM of the present invention includes steps of preparing plurality xTU-C (various digital subscriber line transceiver unit at central office end, such as ADSL, SHDSL (symmetric high speed DSL) and VDSL (Very high speed DSL)) and plurality sets of broadband multiplexers which via Y-connecting lines are correspondingly connected with every xTU-C, continuously detecting whether the broadband multiplexers are in removal or fault state and setting only one set of existing and non-faulting broadband multiplexer in active state to take charge of multiplex processing and connecting the xTU-C with the network and setting the remaining broadband multiplexers in standby state.

The present invention can be best understood through the following description and accompanying drawings wherein:

### BRIEF DESCRIPTION OF THE DRAWINGS

Fig. 1 shows the structure of a conventional DSLAM equipment;
Fig. 2 shows the structure of the connecting lines of the redundancy system of the present invention;
Fig. 3 is a circuit block diagram of the redundancy system of the present invention; and
Fig. 4 is an operation flow chart of the redundancy system of the present invention.

### DETAILED DESCRIPTION OF THE PREFERRED EMBODIMENTS

The line card mentioned hereinafter can be applied for ADSL or various digital subscriber lines (xDSL) such as SHDSL and VDSL.

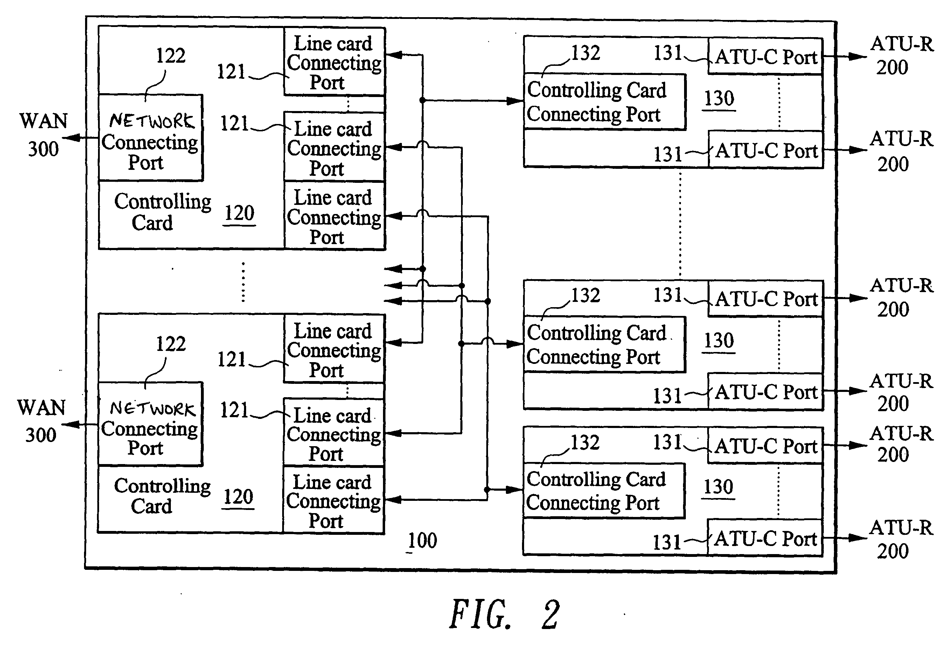

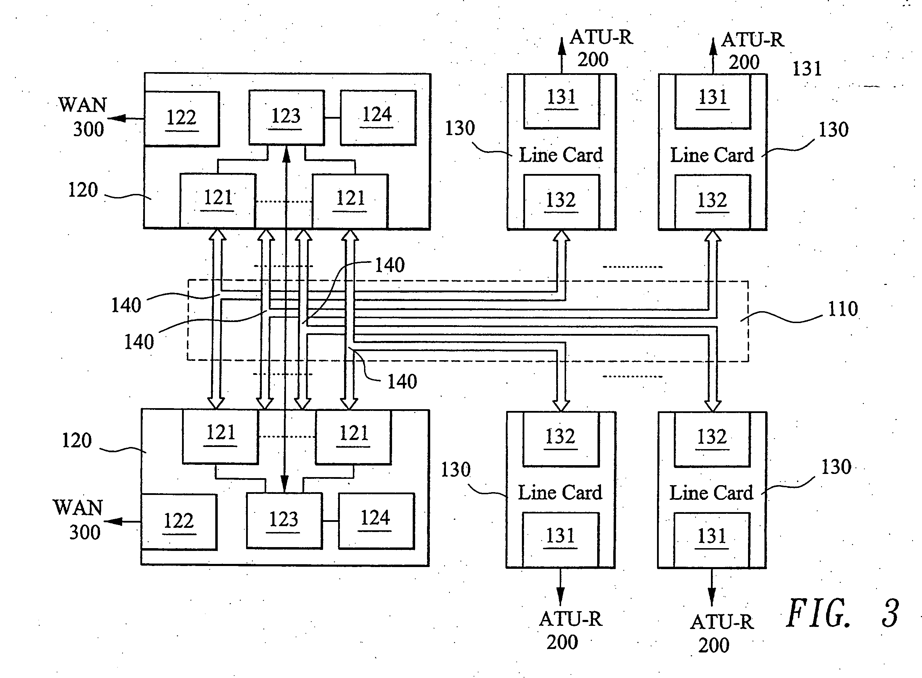

Fig. 2 shows the structure of the connecting lines of the redundancy system of the present invention. Fig. 3 is a circuit block diagram of the redundancy system of the present invention. The present invention is mainly used in a digital subscriber line access multiplexer (DSLAM) 100. The DSLAM serves to providing multiplex accessing to a network 300 such as Internet for a plurality of remote xTU-R 200. The xTU-R 200 can be an xDSL modem or router.

Referring to Fig. 3, in the DSLAM of the present invention are disposed a data bus 110, plurality sets of control cards 120 and plurality sets of line cards 130. The data bus 110 is connected with a plurality of bus sockets adapted for the control cards 120 and the line cards 130. The data bus 110 mainly serves to exchange the data signal of the line cards 130 and the control signal of the control cards 120.

Each control card 120 has a plurality line card connecting ports 121 and at least one network connecting port 122 for connecting with a wide area network 300. Preferably, optical fiber cable can be used to achieve larger bandwidth. At least one set of broadband multiplexer is arranged in the control card 120 for providing multiplex accessing to the network 300 for the line cards 130.

Each line card 130 has a plurality of line connecting ports 131 and a control card connecting port 132. The line connecting ports 131 are correspondingly connected with the xTU-R 200. Preferably, the digital subscriber lines mostly use the conventional ATM lines to connect with the user end. Plurality xTU-C are arranged in the line card 130 for correspondingly connecting with the xTU-R 200 (referred to as remote modem apparatuses hereinafter) so as to provide connection access between the remote modem apparatuses 200 and the network.

The line card 130 of the present invention has only one set of control card connecting port 132. This is different from the conventional DSLAM which has two sets of control card connecting ports. Therefore, the present invention employs plurality Y-connecting lines 140, that is, each control card connecting port 132 uses the same connecting line 140 to connect with the line card connecting ports 121 of two or more sets of control cards 120. Accordingly, over one half of the connecting lines of every line card 130 are saved.

However, on the Y-connecting line 140 of the present invention, the case of more than one set of control card 120 present in the active state at the same time should be avoided. Therefore, the control card 120 is designed with a detection means for detecting whether only one set of control card 120 is set in the active state and the remaining control cards 120 are in the standby state.

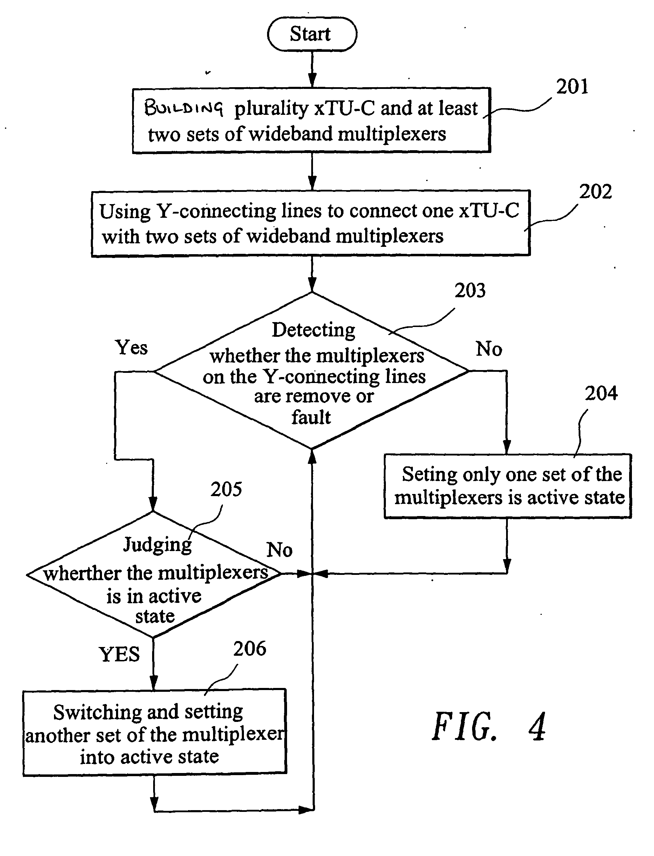

Fig. 4 is an operation flow chart of the redundancy system of the present invention. In operation, first, plurality xTU-C and at least two sets of broadband multiplexers (control card) are prepared (step 201). The xTU-C are arranged in the DSLAM line card 130, while the broadband multiplexers are arranged in the DSLAM control card 120.

Then, the Y-connecting line 140 is correspondingly connected with an xTU-C and two sets of broadband multiplexers (step 202). That is, the same connecting line is connected with an xTU-C and two sets of broadband multiplexers. More then two sets of broadband multiplexers could be used for increasing system redundancy reliability.

Then, it is continuously detected whether the broadband multiplexers on the Y-connecting line 140 are in removal or fault state (step 203). In the case it is detected that plurality sets of broadband multiplexers are in existing and non-fault state, only one set of broadband multiplexer is set in active state to take charge of multiplex processing and connecting the xTU-C with the network. The remaining broadband multiplexers are in the standby state (step 204).

In case it is detected that there are broadband multiplexers which are in removal or fault state (step 203), it is judged whether the broadband multiplexers are those in the active state (step 205). If false, it can be ignored. If true, another set of broadband multiplexer in existing and non-fault state is immediately switched and set into active state to continuously take charge of multiplex processing and connect the xTU-C with the network (step 206).

In order to achieve the objects of detection and automatic switch, in the preferred embodiment of the present invention (further with reference to Fig. 3), a control unit 123 and a state recorder 124 can be provided in the control card 120. The control unit 123 can control the output/input operation of every line card connecting ports 121 of the control card 120. The control units 123 of all the control cards 120 are connected with each other to ensure that only one set of control card 120 in active state.

By means of the interconnection between the control units 123, the state recorders 124 synchronously record the operation states of the control cards 120 on the Y-connecting lines 140. Accordingly, the control cards on the Y-connecting lines 140 can synchronously control the output/input states of the line card connecting ports 121, that is, control the operation states of the control cards 120. Therefore, the object of automatic switch between the faulting and redundancy broadband multiplexers can be achieved.

For example, when a new set of control card 120 is inserted into the bus socket on the Y-connecting line 140, the control unit 123 there above immediately reads and duplicates the recorded values in the state recorders 124 on other control cards 120 as well as synchronously changes the recorded values in all the state recorders 124 so as to renew the operation states of the control cards 120. In the case that there are control cards 120 in removal or fault state, the state recorder 123 will synchronously change the recorded value thereof so as to judge whether the control card 120 is in active state. If true, one redundancy control card is immediately switched and set into active state.

The above embodiments are only used to illustrate the present invention, not intended to limit the scope thereof.

## Claims

1. A redundancy system for a DSLAM, the DSLAM (100) serving to provide multiplex accessing to a network (300) for a plurality of remote xTU-R (200), said redundancy system comprising:
a plurality of control cards (120) each having plurality line card connecting ports (121) and a network connecting port (122) for connecting with the network (300);
a plurality of line cards (130) each having plurality line connecting ports (131) and a control card connecting port (132), the line connecting ports (131) being correspondingly connected with the xTU-R (200); and
a plurality of Y-connecting lines (140), the same Y-connecting line (140) being connected with one of the control card connecting ports (132) and one line card connecting ports (121) of each of two or more of the plurality of control cards (120), whereby, by means of the control cards (120), operation states on the Y-connecting lines (140) can be detected to switch and set one of the control cards (120) into active state and set the remaining control cards (120) into standby state.

2. The redundancy system as claimed in claim 1, wherein the xTU-R (200) is an xDSL modem or router.

3. The redundancy system as claimed in claim 1, wherein the network is an Internet.

4. The redundancy system as claimed in claim 1, wherein the line card (130) includes plurality sets of xDSL xTU-C for correspondingly connecting with the remote xTU-R (200).

5. The redundancy system as claimed in claim 1, wherein each control card (120) includes a plurality of broadband multiplexer for providing multiplex accessing to the network (300) for the line cards (130).

6. The redundancy system as claimed in claim 1, further comprising:
a data bus (110) having a plurality of bus sockets for inserting the control cards (120) and line cards (130) therein, the data bus (110) serving to exchange the data signal of the line cards (130) and the control signal of the control cards (120).

7. A redundancy method for DSLAM, the DSLAM (100) serving to provide multiplex accessing to a network (300) for a plurality of remote xTU-R (200), said redundancy method comprising steps of:
preparing a plurality of xTU-C for correspondingly connecting with the remote xTU-R (200);
preparing a plurality of broadband multiplexers, whereby an Y-connecting line (140) is connected with an xTU-Cand two or more sets of broad band multiplexers;
continuously detecting whether the broadband multiplexers on the y-connecting line are in removal or fault state; and
setting only one set of existing and non-faulting broadband multiplexer in active state to take charge of multiplex processing and connecting the xTU-C with the network (300) and setting the remaining broadband multiplexers in standby state.

8. The redundancy method as claimed in claim 7, wherein the xTU-R (200) is xDSL modem or router.

9. The redundancy method as claimed in claim 7, wherein the network is an Internet.

10. The redundancy method as claimed in claim 7, wherein the xTU-C are arranged on a DSLAM line card (130) for correspondingly connecting with the remote xTU-R (200).

11. The redundancy method as claimed in claim 7, wherein a set of broadband multiplexers is arranged on a DSLAM control card (120).

12. The redundancy method as claimed in claim 7, further comprising a step after preparing plurality sets of broadband multiplexers in case that the broadband multiplexers in operation are removed or in fault state, switching and setting another set of broadband multiplexer which is in existing and non-fault state into active state to continuously take charge of multiplex processing and connecting the xTU-C with the network.

## Patentansprüche

1. Redundanzsystem für einen DSLAM, wobei der DSLAM (100) dazu dient, einen Multiplex-Zugang zu einem Netzwerk (300) für eine Mehrzahl von entfernten xTU-R's (200) bereitzustellen, wobei das Redundanzsystem aufweist:
eine Mehrzahl von Steuerkarten (120), wobei jede mehrere Anschlusskarte-Verbindungsports (121) und einen Netzwerk-Verbindungsport (122) zum Verbinden mit dem Netzwerk (300) aufweist;
eine Mehrzahl von Anschlusskarten (130), wobei jede mehrere Anschluss-Verbindungsports (131) und einen Steuerkarte-verbindungsport (132) aufweist, wobei die Anschluss-verbindungsports (131) jeweils mit den xTU-R*'*s (200) verbunden sind; und
eine Mehrzahl von Y-Verbindungsleitungen (140), wobei die selbe Y-Verbindungsleitung (140) mit einem der Steuerkarte-Verbindungsports (132) und einem Anschlusskarte-Verbindungsport (121) von jeder von zwei oder mehr der Mehrzahl von Steuerkarten (120) verbunden ist, wodurch mittels der Steuerkarten (120) die Betriebszustände auf den Y-Verbindungsleitungen (140) erfasst werden können, um eine der Steuerkarten (120) in den aktiven Zustand zu schalten und zu setzen und die verbleibenden Steuerkarten (120) in den Bereitschaftszustand zu setzen.

2. Redundanzsystem gemäß Anspruch 1, wobei die xTU-R (200) ein xDSL-Modem oder -Router ist.

3. Redundanzsystem gemäß Anspruch 1, wobei das Netzwerk ein Internet ist.

4. Redundanzsystem gemäß Anspruch 1, wobei die Anschlusskarte (130) mehrere Sets von xDSL-xTU-C's zum jeweiligen Verbinden mit den entfernten xTU-R's (200) aufweist.

5. Redundanzsystem gemäß Anspruch 1, wobei jede Steuerkarte (120) eine Mehrzahl von Breitband-Multiplexern zum Bereitstellen eines Multiplex-Zugangs zu dem Netzwerk (300) für die Anschlusskarten (130) aufweist.

6. Redundanzsystem gemäß Anspruch 1, welches ferner aufweist:
einen Datenbus (110), der eine Mehrzahl von Bus-Sockeln zum Einstecken der Steuerkarten (120) und der Anschlusskarten (130) darin aufweist, wobei der Datenbus (110) dazu dient, das Datensignal der Anschlusskarten (130) und das Steuersignal der Steuerkarten (120) auszutauschen.

7. Redundanzverfahren für einen DSLAM, wobei der DSLAM (100) dazu dient, einen Multiplex-Zugang zu einem Netzwerk (300) für eine Mehrzahl von entfernten xTU-R*'*s (200) bereitzustellen, wobei das Redundanz-Verfahren Schritte aufweist des:
Bereitstellens einer Mehrzahl von xTU-C's zum jeweiligen Verbinden mit den entfernten xTU-R's (200);
Bereitstellens einer Mehrzahl von Breitband-Multiplexern, wobei eine Y-Verbindungsleitung (140) mit einer xTU-C und zwei oder mehreren Sets von Breitband-Multiplexern verbunden ist;
fortlaufenden Erfassens, ob sich die Breitband-Multiplexer an der Y-Verbindungsleitung im Entfernt- oder Fehlerzustand befinden; und
Setzens nur eines Sets der vorhandenen und nicht fehlerhaften Breitband-Multiplexer in den aktiven Zustand, um für die Multiplex-Verarbeitung und das Verbinden der xTU-C's mit dem Netzwerk (300) zu sorgen, und Setzens der verbleibenden Breitband-Multiplexer in den Bereitschaftszustand.

8. Redundanzverfahren gemäß Anspruch 7, wobei die xTU-R (200) ein xDSL-Modem oder -Router ist.

9. Redundanzverfahren gemäß Anspruch 7, wobei das Netzwerk ein Internet ist.

10. Redundanzverfahren gemäß Anspruch 7, wobei die xTU-C's auf einer DSLAM-Anschlusskarte (130) zum jeweiligen Verbinden mit den entfernten xTU-R's (200) angeordnet sind.

11. Redundanzverfahren gemäß Anspruch 7, wobei ein Set der Breitband-Multiplexer auf einer DSLAM-Steuerkarte (120) angeordnet ist.

12. Redundanzverfahren gemäß Anspruch 7, das ferner einen Schritt nach dem Bereitstellen mehrerer Sets von sreitband-Multiplexern aufweist, wenn die in Betrieb befindlichen Breitband-Multiplexer entfernt sind oder sich im Fehlerzustand befinden, der ein anderes Set eines Breitband-Multiplexers, welcher sich im Vorhanden- und Fehlerfrei-Zustand befindet, in den aktiven zustand schaltet und setzt, um fortlaufend für eine Multiplex-Verarbeitung und eine Verbindung der xTU-C's mit dem Netzwerk zu sorgen.

## Revendications

1. Système de redondance destiné à un multiplexeur d'accès DSL, le multiplexeur d'accès DSL (100) servant à fournir un accès en multiplex à un réseau (300) pour une pluralité de xTU-R distants (200), ledit système de redondance comprenant :
une pluralité de cartes de contrôle (120) ayant chacune une pluralité de ports de raccordement de cartes de lignes (121) et un port de raccordement au réseau (122) permettant un raccordement au réseau (300) ;
une pluralité de cartes de lignes (130) ayant chacune une pluralité de ports de raccordement de lignes (131) et un port de raccordement de carte de contrôle (132), les ports de raccordement de lignes (131) étant reliés de manière correspondante aux xTU-R (200); et
une pluralité de lignes de raccordement en Y (140), les mêmes lignes de raccordement en Y (140) étant reliées à l'un des ports de raccordement de cartes de contrôle (132) et à l'un des ports de raccordement de cartes de lignes (121) de chacune de deux ou plus de la pluralité de cartes de contrôle (120), moyennant quoi, à l'aide des cartes de contrôle (120), les états de fonctionnement sur les lignes de raccordement en Y (140) peuvent être détectés afin de faire passer l'une des cartes de contrôle (120) à un état actif, et de faire passer les cartes de contrôle restantes (120) à un état de veille.

2. Système de redondance selon la revendication 1, dans lequel le xTU-R (200) est un modem ou un routeur xDSL.

3. Système de redondance selon la revendication 1, dans lequel le réseau est Internet.

4. Système de redondance selon la revendication 1, dans lequel la carte de ligne (130) comprend une pluralité d'ensembles de xTU-C xDSL destinés à être reliés de manière correspondante aux xTU-R distants (200).

5. Système de redondance selon la revendication 1, dans lequel chaque carte de contrôle (120) comprend une pluralité de multiplexeurs à large bande permettant d'assurer un accès en multiplex au réseau (300) pour les cartes de lignes (130).

6. Système de redondance selon la revendication 1, comprenant en outre : un bus de données (110) ayant une pluralité de fiches de bus permettant d'insérer les cartes de contrôle (120) et les cartes de lignes (130) à l'intérieur, le bus de données (110) servant à échanger le signal de données des cartes de lignes (130) et le signal de contrôle des cartes de contrôle (120).

7. Procédé de redondance destiné à un multiplexeur d'accès DSL, le multiplexeur d'accès DSL (100) servant à fournir un accès en multiplex à un réseau (300) pour une pluralité de xTU-R distants (200), ledit procédé de redondance comprenant les étapes consistant à :
préparer une pluralité de xTU-C destinés à être reliés de manière correspondante aux xTU-R distants (200) ;
préparer une pluralité de multiplexeurs à large bande, moyennant quoi une ligne de raccordement en Y (140) est reliée à un xTU-C et à deux ensembles de multiplexeurs à large bande ou plus ;
détecter en continu si les multiplexeurs à large bande sur la ligne de raccordement en Y sont dans un état de retrait ou de défaillance ; et
faire passer un seul ensemble de multiplexeurs à large bande existants et non défaillants à un état actif afin de prendre en charge le traitement en multiplex et le raccordement des xTU-C au réseau (300), et faire passer les multiplexeurs à large bande restants à un état de veille.

8. Procédé de redondance selon la revendication 7, dans lequel le xTU-R (200) est un modem ou un routeur xDSL.

9. Procédé de redondance selon la revendication 7, dans lequel le réseau est Internet.

10. Procédé de redondance selon la revendication 7, dans lequel les xTU-C sont agencés sur une carte de ligne de multiplexeur d'accès DSL (130) afin d'être reliés de manière correspondante aux xTU-R distants (200).

11. Procédé de redondance selon la revendication 7, dans lequel un ensemble de multiplexeurs à large bande est agencé sur une carte de contrôle de multiplexeur d'accès DSL (120).

12. Procédé de redondance selon la revendication 7, comprenant en outre une étape après la préparation de la pluralité d'ensembles de multiplexeurs à large bande, lorsque les multiplexeurs à large bande qui fonctionnent sont retirés ou dans un état de défaillance, consistant à faire passer un autre ensemble de multiplexeurs à large bande qui existent et qui ne sont pas dans un état de défaillance à un état actif, de façon à prendre en charge en continu le traitement en multiplex et le raccordement des xTU-C au réseau.
